# EUROPEAN PATENT SPECIFICATION

(11) **EP 2 739 082 B1**
(45) Date of publication and mention of the grant of the patent: **16.01.2019**
(21) Application number: 14154677.0
(22) Date of filing: 23.04.2010
(51) Int. Cl.: H04W 28/08

(54) **Load sharing method, device, and system**
Lastenteilungsverfahren, -vorrichtung und -system
Procédé, dispositif et système de partage de charge

(30) Priority: 23.04.2009 CN 200910082554
(43) Date of publication of application: 04.06.2014
(62) Divisional of application: 12180287.0
(73) Proprietor: Huawei Technologies Co., Ltd., Longgang District Shenzhen, Guangdong 518129 (CN)
(72) Inventor: GAO, Lingling, 518129 Shenzhen Guangdong (CN); LI, Jianbo, 518129 Shenzhen Guangdong (CN)
(74) Representative: Thun, Clemens

(56) References cited:
- EP-A1- 1 592 275
- EP-A1- 1 713 290
- WO-A1-2008/061701
- US-A1- 2006 285 523
- US-A1- 2007 280 159
- US-A1- 2008 318 589

## Description

### FIELD OF THE INVENTION

The present invention relates to the field of communication technologies, and in particular, to a load sharing method, device and system.

### BACKGROUND

Evolved universal mobile telecommunication system (universal mobile telecommunication system, UMTS for short) territorial radio Access network (evolved universal mobile telecommunication system territorial radio access network, E-UTRAN for short) and evolved packet core (evolved packet core, EPC for short) form evolved packet system (evolved packet system, EPS for short). The E-UTRAN includes a base station (Evolved Node B, eNB for short). On the EPS with flat system architecture, the load status between eNBs can be communicated by exchanging signaling through interconnected X2 interfaces. Each eNB serves a separate cell. Each eNB is connected to mobility management entity (mobility management entity, MME for short) in the EPC through S1 interface.

When implementing the present invention, the inventor finds at least the following defects of the existing technology: In the preceding system, in different time periods, the traffic volume of the cells served by each eNB is different. An eNB to which a cell with a light traffic volume belongs has a light load. An eNB to which a cell with a heavy traffic volume belongs has a heavy load. As a result, the load on eNBs is unbalanced, thereby lightering the usage rate of radio baseband resource.

US 2007/280159 A1 discloses a method in which a local base station and remote base station(s) respectively perform physical channel procession, so that the remote base station(s) can share given processing loads, thereby avoiding call loss caused by the local base station's inadequate resources.

US 2008/318589 A1 discloses a method in which local BTS applies the signal distribution matter by delivery the cell's configuration information to remote BTS.

US 2006/285523 A1 discloses a method for achieving more efficient resource allocation by executing resource relocation processing without disconnecting an existing call.

### SUMMARY

Base stations are provided in embodiments of the present invention.

The invention is set out in the appended set of claims. The embodiments and/or examples of the following description which are not covered by the appended claims are considered as not being part of the present invention.

A base station, when programmed for carrying out a method for sharing load, includes:
means for obtaining a current load value of the base station; means for selecting a sharing base station from middle base stations that belong to a mobility management entity, MME, connected to the base station, if the current load value of the base station exceeds a preset load threshold value; means for transmitting information of a load to be shared to the selected sharing base station, for the load to be shared with the sharing base station without switching a user equipment, UE, to a cell served by the sharing base station; and means for sharing the load to be shared to the sharing base station according to baseband resource prepared based on the information of the load to be shared, characterized in that
the information of the load to be shared comprises context information of the UE corresponding to the load to be shared, and a terminal ID in the MME.

Another base station, when programmed for carrying out a method for sharing load, includes:
means for receiving information of a load to be shared sent from a requesting base station, for the load to be shared with the base station without switching a user equipment, UE, in a cell served by the requesting base station to another cell served by the base station when a current load of the requesting base station exceeds a present load threshold; and means for preparing baseband resource based on the information of the load to be shared for the requesting base station to share the load to be shared with the base station, characterized in that
the information of the shared load comprises context information of the UE corresponding to the shared load, and a terminal ID in the MME.

It can be understood from the preceding technical scheme that when the requesting eNB in the embodiment of the present invention detects an excessively heavy load, a sharing eNB is selected from the middle eNBs configured in the same MME to share the load to be balanced. A terminal that shares services can use the radio frequency resource of a heavy-load eNB, that is, the requesting eNB, and uses the baseband resource of other light-load eNB, that is, the sharing eNB, thereby balancing the load among eNBs, improving the usage rate of radio baseband resource, fully using different devices of the operator, and saving the cost.

### BRIEF DESCRIPTION OF THE DRAWINGS

To better illustrate technical solutions in embodiments of the present invention or in the prior art, the drawings that need to be used in embodiments of the present invention or the description of existing technologies are introduced briefly. Obviously, the drawings merely reflect some embodiments of the present invention. Those skilled in the art can obtain other drawings based on these drawings without innovative work.
FIG. 1 shows a process of a load sharing method provided in a first embodiment of the present invention;
FIG. 2 shows a process of a load sharing method provided in a second embodiment of the present invention;
FIG. 3 shows a process of a load sharing method provided in a third embodiment of the present invention;
FIG. 4 shows a structure of a load sharing device provided in a fourth embodiment of the present invention;
FIG. 5 shows a structure of a load sharing device provided in a fifth embodiment of the present invention; and
FIG. 6 shows a structure of a load sharing system provided in a sixth embodiment of the present invention.

### DETAILED DESCRIPTION

The technical solution under the present invention is elaborated below with reference to the accompanying drawings. Evidently, the embodiments described below are for the exemplary purpose only, without covering all embodiments of the present invention. All the other embodiments obtained by those skilled in the art without creative work based on the embodiments of the present invention are protected by the present invention.

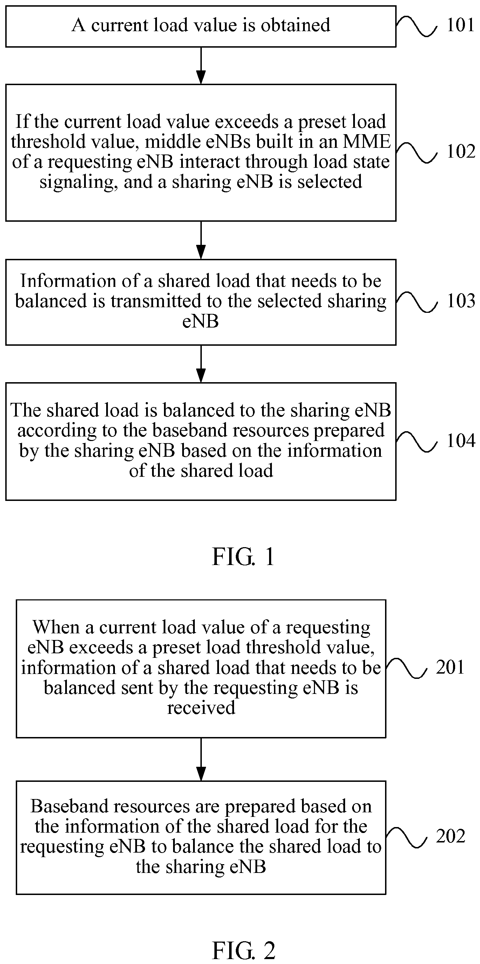

FIG. 1 shows a process of a load sharing method provided in a first embodiment of the present invention. The load sharing method in this embodiment may include:
Step 101: obtaining a current load value.
Step 102: if the current load value exceeds a preset load threshold value, interacting with middle eNBs built in an MME of a requesting eNB through load state signaling, and selecting a sharing eNB.
Step 103: transmitting information of a shared load that needs to be balanced to the selected sharing eNB.
Step 104: sharing the shared load to the sharing eNB according to baseband resource prepared based on the information of the shared load.

The load threshold value in this embodiment is the load threshold value for the requesting eNB to ensure quality of service (quality of service, QoS for short) for UE. If the current load value is smaller than this load threshold value, the requesting eNB can ensure the QoS for an accessed UE. If the current load value is greater than this load threshold value, the requesting eNB cannot ensure the QoS for an accessed UE.

The load sharing method provided in this embodiment of the present invention may use two modes for sharing the services of UE. In one mode, the requesting eNB shares all services of one or more UEs to the sharing eNB. In another mode, the requesting eNB shares some services of one or more UEs to the sharing eNB. For the first mode, the information of the shared load in this embodiment may include UE information such as the context information of the UE for load sharing and ID (AP ID) of the UE in the MME. For the second mode, the information of the shared load in this embodiment further includes service information such as service ID in load sharing.

In this embodiment, the overloaded requesting eNB can balance the load to be balanced to one or more sharing eNBs configured in the homing MME so that UEs can use the radio resource of the heavy-load eNB and use the baseband resource of other light-load eNBs to ensure the QoS, thereby properly using baseband resource sharing of light-load eNBs, balancing the eNB load, and improving the usage rate of radio baseband resource.

FIG. 2 shows a process of a load sharing method in a second embodiment of the present invention. The load sharing method in this embodiment may include:
Step 201: when a current load value of a requesting eNB exceeds a preset load threshold value, receiving information of a shared load that needs to be balanced sent by a requesting eNB; and
Step 202: preparing baseband resource based on the information of the shared load for the requesting eNB to share the shared load to a sharing eNB.

The load sharing method provided in this embodiment of the present invention may use two modes for sharing the services of UE. In one mode, the requesting eNB balances all services of one or more UEs to the sharing eNB. In another mode, the requesting eNB balances some services of one or more UEs to the sharing eNB. For the first mode, the information of the shared load in this embodiment may include UE information such as the context information of the UE for load sharing and ID (AP ID) of the UE in the MME. For the second mode, the information of the shared load in this embodiment further includes service information such as service ID in load sharing. The sharing eNB can prepare relevant baseband resource for the corresponding shared load between eNB and MME based on the information of the shared load, and use the relevant baseband resource for the corresponding shared load to receive load-sharing data from the EPC. In this manner, after relevant processing of the load-sharing data, the requesting eNB can deliver the load-sharing data to relevant UEs. As a result, the requesting eNB with an excessively heavy load currently can balance the load to the sharing eNB with a light load.

In this embodiment, the overloaded requesting eNB can balance the load to be balanced to one sharing eNB configured in the homing MME so that UEs can use radio resource of the heavy-load eNB and use the baseband resource of other light-load eNBs to ensure the QoS, thereby properly using baseband resource sharing of light-load eNBs, balancing the eNB load, and improving the usage rate of radio baseband resource.

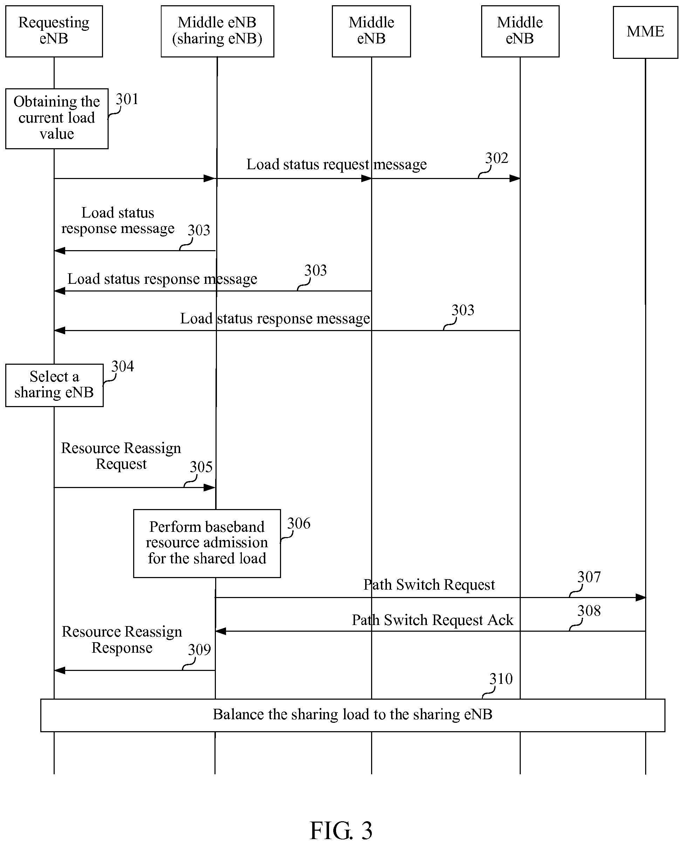

FIG. 3 shows a process of a load sharing method in a third embodiment of the present invention. The load sharing method in this embodiment may include:
Step 301: obtaining, by a requesting eNB, a current load value of the requesting eNB.
Step 302: if the current load value of the requesting eNB is greater than a preset load threshold value, sending, by the requesting eNB, a resource status request message (resource status request)to all middle eNBs configured in a homing MME of the requesting eNB, wherein the resource status request message carries a shared load value (load threshold) that specifies the load to be balanced.

In this embodiment, all middle eNBs in a same MME that can be interconnected through the X2 interface can be configured into an eNB pool (eNB pool), and a relevant eNB pool ID (eNB pool ID) is allocated to this eNB pool. The middle eNBs in the eNB pool are independent. The configuration of the eNB pool is simple. The subsequent networking mode is flexible, and capacity expansion is convenient.

Different policies may be used to determine the shared load value. For example, the excessive load value may be defined as the expected shared load value. Relevant information, such as service type and service quality, of the current service may be used to define the shared load value. The shared load value determined through the preceding policies defines the load to be balanced.

Further, this resource status request message may contain relevant information of the eNB pool, for example, eNB pool ID, relevant information of the operator to which the relevant middle eNB belongs, for example, operator ID, and relevant service information, for example, service license ID. Table 1 lists the IEs contained in the resource status request message.

**Table 1 IEs contained in the resource status request message**

| **IE Name** | **Mandatory or Not** | **Status in the Protocol** |
|---|---|---|
| Message Type | Mandatory (M) | Existing |
| Registration Request | Mandatory (M) | Existing |
| Cell To Report List | | Existing |
| >Cell ID | Mandatory (M) | Existing |
| Reporting Periodicity | Optional (O) | Existing |
| Load To Report List | Mandatory (M) | Newly added |
| >eNodeB Pool ID | Mandatory (M) | Newly added |
| >Load Threshold | Mandatory (M) | Newly added |
| >Operator ID | Mandatory (M) | Newly added |

Compared with the current signaling, the resource status request message in this step adds the load to report list IE. This IE is mandatory in the step in this embodiment of the present invention. The cell to report and reporting periodicity IEs are optional. The load threshold IE is the shared load expected by the requesting eNB for other middle eNBs in the same eNB pool to share.

Step 303: receiving, by the middle eNBs configured in the MME, the resource status request message, and returning a resource status response message to the requesting eNB based on the value of load threshold and the current load value of each middle eNB, where the resource status response message carries a load information IE that specifies the current load information corresponding to the middle eNB.

After receiving the resource status request message, the middle eNB in the homing MME of the requesting eNB can determine value of the load of the requesting eNB that can be shared by the middle eNB based on the obtained current load value, and compare the determined value with the value of the load that needs to be balanced contained in the resource status request message. If the value of the load that can be shared is greater than the value of the load that needs to be balanced, the middle eNB returns a resource status response message to the requesting eNB. Further, each middle eNB can determine the value of the load that it can share based on service license (license) it can provide. Accordingly, the resource status response message may contain license ability (license ability). Table 2 lists the IEs contained in the resource status response message.

**Table 2 IEs contained in the resource status response message**

| **IE Name** | **Mandatory or Not** | **Status in the Protocol** |
|---|---|---|
| Message Type | Mandatory (M) | Existing |
| Criticality Diagnostics | Mandatory (M) | Existing |
| Load Report List | Mandatory (M) | Newly added |
| Operator ID | Mandatory (M) | Newly added |
| Licenses Ability | Mandatory (M) | Newly added |
| Load Information | Mandatory (M) | Newly added |

Compared with the existing signaling, the resource status response message in this step adds the load to report list IE, which is mandatory in this step.

Step 304: receiving, by the requesting eNB, resource status response messages from one or more middle eNBs, and selecting a proper middle eNB as a sharing eNB according to the current load value of the middle eNB and the license type in the resource status response messages, for example, selecting the middle eNB with the smallest current load value as the sharing eNB.

Step 305: sending, by the requesting eNB, a resource reassign request message (resource reassign request) to the selected sharing eNB, where the resource reassign request message carries information of the load to be balanced, for the sharing eNB to prepare baseband resource corresponding to the load to be balanced.

The load sharing method provided in this embodiment of the present invention may use two modes for sharing the services of UE. In one mode, the requesting eNB balances all services of one or more UEs to the sharing eNB. In another mode, the requesting eNB shares some services of one or more UEs to the sharing eNB. For the first mode, the information of the shared load in this embodiment may include UE information such as the context information of the UE for load sharing and ID (AP ID) of the UE in the MME. For the second mode, the information of the shared load in this embodiment further includes service information such as the service ID in load sharing.

Step 306: receiving, by the sharing eNB, the resource reassign request message, and performing baseband resource admission for the shared load requested in the resource reassign request message.

Step 307: after baseband resource admission succeeds, sending, by the sharing eNB, a path switch request (path switch request) message for establishing user plane data for relevant user load, where the message carries information of the load to be balanced to request for sharing the relevant load.

Step 308: after receiving the path switch request message and interacting with a service gateway (S-GW) to obtain a response from the S-GW, sending, by the MME, a path switch request ack (path switch request ack) message to the sharing eNB to complete interaction between the sharing eNB and the MME at the signaling plane and data plane.

Step 309: receiving, by the sharing eNB, the path switch request ack message, and returns a resource reassign response (resource reassign response) message to the requesting eNB.

For details about the Resource Reassign Request message in step 305, reference may be made to handover request (handover request) message in the 3GPP 36.323 X2AP protocol. For details about the Resource Reassign Response message in step 309, reference may be made to handover request ack (handover request ack) message in the 3GPP 36.323 X2AP protocol.

After receiving the Resource Reassign Response message, the requesting eNB releases the baseband resource related to the shared UE. By far, the requesting eNB receives the resource reassign response message and confirms that load sharing is implemented at the signaling layer.

Step 310: interacting, by the sharing eNB, with the MME and the requesting eNB, and the requesting eNB shares the load to be balanced to the sharing eNB.

By far, the downlink data delivered by the core network to the UE that shares the load is transmitted to the sharing eNB. The sharing eNB transmits the data to the UE by using remote radio unit (remote radio unit, RRU for short) of the requesting eNB through the CPRI interface between the sharing eNB and the requesting eNB. The uplink data is transmitted in the opposite direction.

In this embodiment of the present invention, the load state between eNBs is known through interaction of the load state signaling at the X2 interfaces of the eNBs. When the load of a certain eNB is unbalanced, a light-load eNB sends a load sharing request to switch the load service of the UE from one eNB to another eNB, thereby balancing the load between eNBs. Signaling interaction between eNBs is implemented by adding relevant IEs to existing signaling and using the path switch signaling group interacted with the core network during switching.

In this embodiment, the requesting eNB and middle eNBs (including the sharing eNB) are neighboring and belong to the same MME, but serve different cells. In different time periods, the traffic volume of a cell served by an eNB is different. For example, the cell served by the requesting eNB is in the city center, where the traffic volume at daytime is heavy. As a result, the load of the requesting eNB is heavy. The cell served by a middle eNB is in the residence area, where the traffic volume at daytime is light. As a result, the load of the middle eNB is light. In this case, the usage of resource among eNBs is unbalanced. The method provided in this embodiment can balance the load by scheduling neighboring sharing eNBs whose load is light when the requesting eNB has a heavy load. In this embodiment, when the load of the requesting eNB is heavy, a sharing eNB can be selected through interaction of the load state signaling with the middle eNBs configured in the same MME. The sharing eNB interacts with the MME in the EPC. The relevant baseband resource of the shared load between the sharing eNB and the MME are used to receive the load-sharing data delivered by the EPC. After relevant processing on the load-sharing data, the sharing eNB interacts with the requesting eNB, and delivers the load-sharing data through the requesting eNB to the relevant UE. In this case, some services, that is, the shared load, of the requesting eNB currently with a heavy load can be processed by the sharing eNB with a light load, thereby implementing switching of services between eNBs.

When the UE does not meet the switching conditions, the eNBs interact signaling through the X2 interface to share the load among eNBs in flexible modes. The shared load can be switched dynamically between eNBs, thereby properly using the baseband resource of the eNB. The UE whose load is shared uses the radio frequency resource of the homing eNB of the accessed cell, that is, the requesting eNB, and the baseband resource of the sharing eNB, thereby balancing the load between the requesting eNB and the destination eNB, reducing the load of the requesting eNB, improving the usage rate of radio baseband resource, and ensuring the QoS for the UE.

In this embodiment, the X2 interface is used to interact signaling for load query and load sharing on the EPS network, and the CPRI interface between eNBs may be used to transmit load data. In this case, in the eNB pool configured in the MME, the requesting eNB with a heavy load can share the load to be balanced to a sharing eNB configured in the same MME, enabling the UE to use the radio frequency resource of a heavy-load eNB and baseband resource of other light-load eNBs, thereby implementing baseband resource sharing among eNBs, balancing the load among eNBs, and improving the usage rate of radio baseband resource.

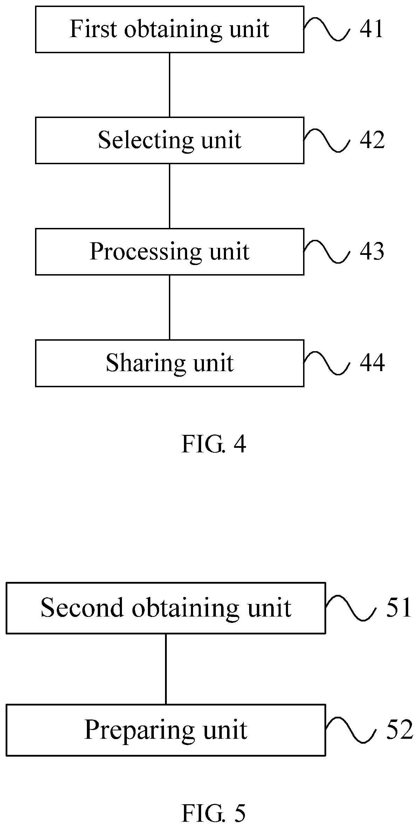

FIG. 4 shows a structure of a load sharing device provided in a fourth embodiment of the present invention. The load sharing device in this embodiment may include a first obtaining unit 41, a selecting unit 42, a processing unit 43, and a sharing unit 44. The first obtaining unit 41 obtains a current load value. If the current load value exceeds a preset load threshold value, the selecting unit 42 interacts through load state signaling with middle eNBs configured in an MME to which the requesting eNB belongs, and selects a sharing eNB. The processing unit 43 transmits information of a shared load that needs to be balanced to the selected sharing eNB. The sharing unit 44 balances the shared load to the sharing eNB according to the baseband resource prepared by the sharing eNB based on the information of the shared load.

The method in the first embodiment of the present invention and the function of the requesting eNB in the third embodiment may be implemented by the load-sharing device provided in the fourth embodiment of the present invention.

The sharing unit in the load sharing device provided in this embodiment of the present invention may use two modes for sharing the services of UE. In one mode, the sharing unit balances all services of one or more UEs to the sharing eNB. In another mode, the sharing unit shares some services of one or more UEs to the sharing eNB. For the first mode, the information of the shared load in this embodiment may include UE information such as the context information of the UE for load sharing and ID (AP ID) of the UE in the MME. For the second mode, the information of the shared load in this embodiment further includes service information such as the service ID in load sharing.

In this embodiment, the overloaded requesting eNB can balance the load to be balanced to one sharing eNB configured in the homing MME so that UEs can use the radio resource of the heavy-load eNB and use the baseband resource of other light-load eNBs, thereby properly using baseband resource sharing of light-load eNBs, balancing the eNB load, and improving the usage rate of radio baseband resource.

FIG. 5 shows a structure of a load sharing device provided in a fifth embodiment of the present invention. The load sharing device in this embodiment may include a second obtaining unit 51 and a preparing unit 52. When the current load value of a requesting eNB exceeds a preset load threshold value, the second obtaining unit 51 receives information of a shared load to be balanced sent by the requesting eNB, and the preparing unit 52 prepares baseband resource based on the information of the shared load for the requesting eNB to balance the shared load to a sharing eNB.

The method in the second embodiment of the present invention and the function of the sharing eNB in the third embodiment may be implemented by the load-sharing device provided in the fifth embodiment of the present invention.

The preparing unit in the load sharing device provided in this embodiment of the present invention can prepare relevant baseband resource for the corresponding shared load between eNB and MME based on the information of the shared load, and use the relevant baseband resource for the corresponding shared load to receive load-sharing data from the EPC. In this manner, after relevant processing of the load-sharing data, the requesting eNB can deliver the load-sharing data to relevant UEs. As a result, the requesting eNB with an excessively heavy load currently can balance the load to the sharing eNB with a light load.

In this embodiment, the overloaded requesting eNB can balance the load to be balanced to one sharing eNB configured in the homing MME so that UEs can use the radio resource of the heavy-load eNB and use the baseband resource of other light-load eNBs, thereby properly using baseband resource sharing of light-load eNBs, balancing the eNB load, and improving the usage rate of radio baseband resource.

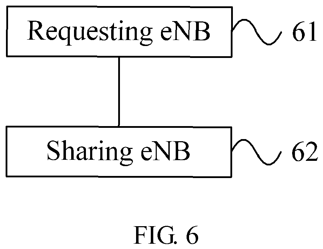

FIG. 6 shows a structure of a load sharing system provided in a sixth embodiment of the present invention. The load sharing system provided in this embodiment may include a requesting eNB 61 and a sharing eNB 62, where:
the requesting eNB 61 is configured to: obtain a current load value; if the current load value exceeds a preset load threshold value, interact with middle eNBs built in an MME of the requesting eNB 61 through load state signaling, and select the sharing eNB 62; transmit information of a shared load that needs to be balanced to the selected sharing eNB 62; and balance the shared load to the sharing eNB 62 according to baseband resource prepared based on information of the shared load; and
the sharing eNB 62 is configured to obtain information of the shared load that needs to be balanced sent by the requesting eNB 61 and prepare baseband resource based on the information of the shared load.

The requesting eNB 61 in this embodiment may be a load sharing device provided in the fourth embodiment of the present invention. The sharing eNB 62 in this embodiment may be a load sharing device provided in the fifth embodiment of the present invention.

It can be understood by those skilled in the art that all or some steps in the preceding embodiments of the present invention can be performed by instructing related hardware through a program. The program can be stored in a storage medium that can be read by a computer. When being executed, the program performs the steps in the preceding embodiments of the present invention. The storage medium may be ROM, RAM, disk, or CD that can store program codes.

Although various embodiments of the present invention have been described in detail above with reference to the drawings, the specific configuration thereof is not limited to the embodiments. Rather, it is intended that the following examples encompass any designs within the scope of the invention.

The preceding embodiments are intended to describe the technical scheme revealed in the present invention but not to confine the invention.

## Claims

1. A base station (61), when programmed for carrying out a method for sharing load, comprising:
means (41) for obtaining a current load value of the base station (61);
means (42) for selecting a sharing base station (62) from middle base stations that belong to a mobility management entity, MME, connected to the base station (61), if the current load value of the base station (61) exceeds a preset load threshold value;
means (43) for transmitting information of a load to be shared to the selected sharing base station (62), for the load to be shared with the sharing base station (62) without switching a user equipment, UE, to a cell served by the sharing base station (62); and
means (44) for sharing the load to be shared to the sharing base station (62) according to baseband resource prepared based on the information of the load to be shared,
**characterized in that**
the information of the load to be shared comprises context information of the UE corresponding to the load to be shared, terminal ID in the MME and service ID.

2. The base station according to claim 1, wherein the means for selecting is further configured to:
send a resource status request message to the middle base stations, wherein the resource status request message carries a load to be shared value;
receive a resource status response message from one or more middle base stations, wherein the resource status response message carries the current load value of the middle base station; and
select at least one middle base station as the sharing base station based on the current load value of the middle base stations.

3. The base station according to claim 2, wherein the resource status request message carries one or more of the following IDs:
base station pool ID, operator ID, and service license ID.

4. The base station according to any one of claims 1 to 3, wherein the means for transmitting is further configured to:
transmit a resource reassign request message to the sharing base station, wherein the resource reassign request message carries the information of the load to be shared.

5. A base station (62), when programmed for carrying out a method for sharing load, comprising:
means (51) for receiving information of a load to be shared sent from a requesting base station (61), for the load to be shared with the base station (62) without switching a user equipment, UE, in a cell served by the requesting base station (61) to another cell served by the base station (62) when a current load of the requesting base station (61) exceeds a present load threshold; and
means (52) for preparing baseband resource based on the information of the load to be shared for the requesting base station (61) to share the load to be shared with the base station (62),
**characterized in that**
the information of the shared load comprises context information of the UE corresponding to the shared load, terminal ID in the MME and service ID.

6. The base station according to claim 5, wherein the means for receiving is further configured to:
receive a resource reassign request message sent by the requesting base station, wherein the resource reassign request message carries the information of the load to be shared.

7. The base station according to claim 5 or 6, wherein the means for preparing is further configured to:
perform baseband resource admission for the load to be shared requested to be shared in the resource reassign request message; and
transmit a path switch request message to a mobility management entity, MME, wherein the path switch request message carries the information of the load to be shared for requesting to share the load to be shared.

## Patentansprüche

1. Basisstation (61), wenn sie zur Durchführung eines Verfahrens zur Lastenteilung programmiert ist, umfassend:
Mittel (41) zum Erlangen eines aktuellen Lastwertes der Basisstation (61);
Mittel (42) zum Auswählen einer gemeinsamen Basisstation (62) aus mittleren Basisstationen, die zu einer Mobilitätsverwaltungseinheit (MME - "Mobility Management Entity") gehören, die mit der Basisstation (61) verbunden ist, wenn der aktuelle Lastwert der Basisstation (61) einen voreingestellten Lastschwellenwert überschreitet; Mittel (43) zum Übertragen von Informationen über eine zu teilende Last an die ausgewählte gemeinsame Basisstation (62), damit die Last mit der gemeinsamen Basisstation (62) geteilt wird, ohne eine Benutzerausrüstung (UE - "User Equipment") zu einer von der gemeinsamen Basisstation (62) bedienten Zelle zu schalten; und
Mittel (44) zum Teilen der zu teilenden Last an die gemeinsame Basisstation (62) gemäß der Basisbandressource, die auf der Grundlage der Informationen der zu teilenden Last vorbereitet wird,
**dadurch gekennzeichnet, dass**
die Informationen der zu teilenden Last Kontextinformationen der UE entsprechend der zu teilenden Last, Terminal-ID in der MME und Service-ID umfassen.

2. Die Basisstation nach Anspruch 1, wobei das Mittel zur Auswahl ferner so ausgelegt ist, dass es:
eine Ressourcenstatusanforderungsnachricht an die mittleren Basisstationen senden, wobei die Ressourcenstatusanforderungsnachricht einen Wert der zu teilenden Last trägt;
von einer oder mehreren mittleren Basisstationen eine Ressourcenstatusantwortnachricht empfängt, wobei die Ressourcenstatusantwortnachricht den aktuellen Lastwert der mittleren Basisstation trägt; und
mindestens eine mittlere Basisstation als gemeinsame Basisstation basierend auf dem aktuellen Lastwert der mittleren Basisstationen auswählt.

3. Basisstation nach Anspruch 2, wobei die Ressourcenstatusanforderungsnachricht eine oder mehrere der folgenden IDs trägt:
Basisstationspool-ID, Betreiber-ID und Service-Lizenz-ID.

4. Basisstation nach einem der Ansprüche 1 bis 3, wobei das Mittel zur Übertragung ferner so ausgelegt ist, dass es:
eine Ressourcenneuzuweisungsanforderungsnachricht an die gemeinsame Basisstation übertragen, wobei die Ressourcenneuzuweisungsanforderungsnachricht die Informationen der zu teilenden Last enthält.

5. Basisstation (62), wenn sie zur Durchführung eines Verfahrens zur Lastenteilung programmiert ist, umfassend:
Mittel (51) zum Empfangen von Informationen über eine von einer anfordernden Basisstation (61) gesendeten Last, damit die Last mit der Basisstation (62) geteilt wird, ohne eine Benutzerausrüstung, UE, in einer von der anfordernden Basisstation (61) bedienten Zelle zu einer anderen von der Basisstation (62) bedienten Zelle zu schalten, wenn eine aktuelle Last der anfordernden Basisstation (61) eine aktuelle Lastschwelle überschreitet; und
Mittel (52) zum Vorbereiten einer Basisbandressource basierend auf den Informationen der zu teilenden Last für die anfordernde Basisstation (61), um die zu teilende Last mit der Basisstation (62) zu teilen,
**dadurch gekennzeichnet, dass**
die Informationen der geteilten Last Kontextinformationen der UE entsprechend der geteilten Last, Terminal-ID in der MME und Service-ID umfassen.

6. Basisstation nach Anspruch 5, wobei das Empfangsmittel ferner so ausgelegt ist, dass es:
eine von der anfordernden Basisstation gesendete Ressourcenneuzuweisungsanforderungsnachricht empfängt, wobei die Ressourcenneuzuweisungsanforderungsnachricht die Information der zu teilenden Last trägt.

7. Basisstation nach Anspruch 5 oder 6, wobei das Mittel zur Vorbereitung ferner so ausgelegt ist, dass es:
die Aufnahme der Basisbandressourcen für die zu teilende Last durchführt, die in der Ressourcenneuzuweisungsanforderungsnachricht angefordert wird; und
eine Pfadwechselanforderungsnachricht an eine Mobility-Management-Einheit, MME, überträgt, wobei die Pfadwechselanforderungsnachricht die Informationen der zu teilenden Last für die Anforderung, die zu teilende Last zu teilen, enthält.

## Revendications

1. Station de base (61), lorsque programmée pour exécuter un procédé destiné à partager une charge, comprenant :
des moyens (41) pour obtenir une valeur de charge actuelle de la station de base (61) ;
des moyens (42) pour sélectionner une station de base de partage (62) parmi des stations de base centrales qui appartiennent à une entité de gestion de mobilité (« mobility management entity »), MME, connectée à la station de base (61), si la valeur de charge actuelle de la station de base (61) dépasse une valeur seuil de charge préréglée ;
des moyens (43) pour transmettre des informations au sujet d'une charge devant être partagée vers la station de base de partage sélectionnée (62), pour que la charge soit partagée avec la station de base de partage sélectionnée (62) sans commuter un équipement utilisateur (« user equipment »), UE, vers une cellule desservie par la station de base de partage (62) ; et
des moyens (44) pour partager la charge devant être partagée vers la station de base de partage (62) conformément à une ressource de bande de base préparée sur la base des informations de la charge devant être partagée,
**caractérisée en ce que**
les informations de la charge devant être partagée comprennent des informations contextuelles de l'UE correspondant à la charge devant être partagée, une ID de terminal dans la MME et une ID de service.

2. Station de base selon la revendication 1, dans laquelle les moyens pour sélectionner sont configurés en outre pour :
envoyer un message de requête de statut de ressource aux stations de base centrales, le message de requête de statut de ressource portant une valeur de charge devant être partagée ;
recevoir un message de réponse de statut de ressource en provenance d'une ou de plusieurs stations de base centrales, le message de réponse de statut de ressource portant la valeur de charge actuelle de la station de base centrale ; et
sélectionner au moins une station de base centrale comme étant la station de base de partage sur la base de la valeur de charge actuelle des stations de base centrales.

3. Station de base selon la revendication 2, dans laquelle le message de requête de statut de ressource porte une ou plusieurs des ID suivantes :
une ID de groupe de stations de base, une ID d'opérateur, et une ID de licence de service.

4. Station de base selon l'une quelconque des revendications 1 à 3, dans laquelle les moyens pour transmettre sont configurés en outre pour :
transmettre un message de requête de ré-attribution de ressource vers la station de base de partage, le message de requête de ré-attribution de ressource portant les informations au sujet de la charge devant être partagée.

5. Station de base (62), lorsque programmée pour exécuter un procédé destiné à partager une charge, comprenant :
des moyens (51) pour recevoir des informations au sujet d'une charge devant être partagée envoyées à partir d'une station de base requérante (61), pour que la charge soit partagée avec la station de base (62) sans commuter un équipement utilisateur, UE, dans une cellule desservie par la station de base requérante (61) vers une autre cellule desservie par la station de base (62) lorsqu'une charge actuelle de la station de base requérante (61) dépasse un seuil de charge présent ; et
des moyens (52) pour préparer une ressource de bande de base sur la base des informations au sujet de la charge devant être partagée pour que la station de base requérante (61) partage la charge devant être partagée avec la station de base (62),
**caractérisée en ce que**
les informations au sujet de la charge partagée comprennent des informations contextuelles de l'UE correspondant à la charge partagée, une ID de terminal dans la MME et une ID de service.

6. Station de base selon la revendication 5, dans laquelle les moyens pour recevoir sont configurés en outre pour :
recevoir un message de requête de ré-attribution de ressource envoyé par la station de base requérante, le message de requête de ré-attribution de ressource portant les informations au sujet de la charge devant être partagée.

7. Station de base selon la revendication 5 ou 6, dans laquelle les moyens pour préparer sont configurés en outre pour :
réaliser une admission de ressource de bande de base pour la charge devant être partagée requise pour être partagée dans le message de requête de ré-attribution de ressource ; et
transmettre un message de requête de commutation de chemin vers une entité de gestion de mobilité, MME, le message de requête de commutation de chemin portant les informations au sujet de la charge devant être partagée pour demander à partager la charge devant être partagée.
